# EUROPEAN PATENT APPLICATION

(11) **EP 1 544 226 A2**
(43) Date of publication of application: **22.06.2005**
(21) Application number: 04028822.7
(22) Date of filing: 06.12.2004
(51) Int. Cl.: C08G 18/38, C09J 175/04

(54) **Two-component water-borne adhesive**

(30) Priority: 17.12.2003 US 738944
(71) Applicant: Bayer MaterialScience LLC, Pittsburgh PA 15205 (US)
(72) Inventor: Roesler, Richard R., Wexford PA 15090 (US); Dormish, Jeffrey F., Upper St. Clair PA 15241 (US); Pethiyagoda, Dinesh, Pittsburgh PA 15205 (US); Yano, Irene L., McKees Rocks PA 15136 (US)
(74) Representative: Perchenek, Nils, Dr.

(57) **Abstract**

A two-component water-borne adhesive composition that includes a first component containing the reaction product obtained by reacting a polyisocyanates with a compound containing at least one hydroxyl or amine group followed by reaction with an aspartate compound and a second component containing a catalyst and/or a resin. The composition is used in a method of bonding a first substrate to a second substrate to form an assembly including at least the first substrate and the second substrate bonded together.

## Description

### BACKGROUND OF THE INVENTION

### 1. Field of the Invention

The present invention relates to two-component water-borne adhesives and particularly to water-borne adhesives containing polyurethanes.

### 2. Background Art

Adhesives are commonly used to join or fasten two or more adherends. Adherends are considered as being any two or more materials, or pieces of material that are being joined together, including wood, metals, plastics, paper, canvas, ceramics, stone, glass, concrete, etc. Adhesives used for these purposes are based on a wide range of technologies, including elastomer/solvent/resin mixtures, epoxies, latexes, polyurethanes, silicones, cyanoacrylates, acrylics, hot melts, and others. Such adhesives can have one or more drawback, such as they may contain solvents which are toxic and often flammable, they can be incompatible with one or more classes of adherends, they can have undesirably long cure times and in many cases the bonds they form of are of insufficient strength.

U.S. Patent No. 5,977,242 discloses a two-part adhesive that includes an aqueous emulsion liquid having a polymer component and an emulsifier component, at least one of which is anionic and a solution having an amine-containing acrylic copolymer.

U.S. Patent No. 6,057,415, discloses compounds having an isocyanate group content and an alkoxysilane group content containing sufficient chemically incorporated hydrophilic groups to form a stable dispersion in water. The compounds can be used with isocyanate-reactive resins in aqueous, two-component coating, adhesive and sealant compositions.

U.S. Published Patent Application 2003/0039846 A1 to Roesler et al. discloses a two-component coating composition containing a polyisocyanate component, an isocyanate-reactive component that contains less than 3% by weight of an aromatic polyamine and 0.1 to 1.8 wt. %, based on the weight of the other components of a compound containing at least one epoxy group and at least one alkoxysilane group.

U.S. Published Patent Application 2003/0173026 A1 to Wu et al. discloses silane functional adhesive compositions for bonding a window to a painted substrate. The process includes applying to the glass or the substrate the silane functional adhesive composition; contacting the glass with the substrate; and allowing the adhesive to cure.

However, both initially and especially after exposure to the elements, heretofore known adhesive do not provide sufficient adhesion and peel strength when used to bond fabrics to hard substrates, a non-limiting example being bonding canvas or plastics to untreated metal surfaces. In such situations, the fabric tends to peel from the metal.

Therefore, there is an established need in the art for adhesive compositions that provide excellent bonding and peel strength both initially and after exposure to the elements.

### SUMMARY OF THE INVENTION

The present invention is directed to a two-component water-borne adhesive composition that includes
a) a first component containing the reaction product obtained by reacting:
   i) polyisocyanates with
   ii) compounds according to formula I

      Z-[-(CR¹ ₂)ₘ-O-]ₙ-W-Z' (I)

      where Z and Z' are independently selected from H, -OH, and NH₂,
      R¹ is selected from H, methyl and ethyl,
      W is a covalent bond or C₁-C₈ linear or branched alkylene group with the proviso that when W is a covalent bond, Z' is H,
      n is from 1 to 1,000, and
      m is from 1 to 6, wherein at least one occurrence of -[-(CR¹₂)ₘ-O-]- in formula 1 is -[-CH₂CH₂-O-]-;
      the reaction product of i) and ii) being reacted with
   iii) a compound corresponding to formula II: 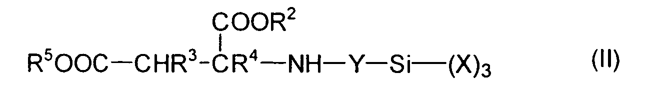 where
      - X: represents identical or different groups selected from C₁-C₁₀ linear or branched alkyl groups and C₁-C₁₀ linear or branched alkoxy groups with the proviso that at least two occurrences of X are alkoxy and if one or two X groups are methoxy, at least one X group must be a C₁-C₁₀ linear or branched alkyl group,
      - Y: represents a C₁-C₈ linear or branched alkylene group,
      - R₂ and R₅: are identical or different and represent organic groups which are inert to isocyanate groups at a temperature of 100°C or less, and
      - R₃ and R₄: are identical or different and represent hydrogen or organic groups which are inert towards isocyanate groups at a temperature of 100°C or less, and
b) a second component containing a catalyst and/or a resin.

The present invention is also directed to a method of bonding a first substrate to a second substrate. The method includes combining component a) and component b) as described above to form a mixture; applying a coating of the mixture to at least one surface of the first substrate or the second substrate, and contacting a surface of the first substrate with a surface of the second substrate, where at least on of the contacting surfaces has the coating applied thereto.

The present invention is further directed to an assembly made according to the above-described method including at least the first substrate and the second substrate bonded together.

### DETAILED DESCRIPTION OF THE INVENTION

Other than in the operating examples, or where otherwise indicated, all numbers or expressions referring to quantities of ingredients, reaction conditions, etc., used in the specification and claims are to be understood as modified in all instances by the term "about." Various numerical ranges are disclosed in this patent application. Because these ranges are continuous, they include every value between the minimum and maximum values. Unless expressly indicated otherwise, the various numerical ranges specified in this application are approximations.

As used herein the term "alkyl" refers to a monovalent radical of an aliphatic hydrocarbon chain of general formula CₛH₂ₛ₊₁, where s is the number of carbon atoms, or ranges therefore, as specified. The term "substituted alkyl" refers to an alkyl group, where one or more hydrogens are replaced with a non-carbon atom or group, non-limiting examples of such atoms or groups include halides, amines, alcohols, oxygen (such as ketone or aldehyde groups), and thiols.

As used herein the terms "cyclic alkyl" or "cycloalkyl" refer to a monovalent radical of an aliphatic hydrocarbon chain that forms a ring of general formula CₛH₂ₛ₋₁, where s is the number of carbon atoms, or ranges therefore, as specified. The term "substituted cycloalkyl" refers to a cycloalkyl group, containing one or more hetero atoms, non-limiting examples being -O-, -NR-, and -S- in the ring structure, and/or where one or more hydrogens are replaced with a non-carbon atom or group, non-limiting examples of such atoms or groups include halides, amines, alcohols, oxygen (such as ketone or aldehyde groups), and thiols. R represents an alkyl group of from 1 to 24 carbon atoms.

As used herein, the term "aryl" refers to a monovalent radical of an aromatic hydrocarbon. Aromatic hydrocarbons include those carbon based cyclic compounds containing conjugated double bonds where 4t+2 electrons are included in the resulting cyclic conjugated pi-orbital system, where t is an integer of at least 1. As used herein, aryl groups can include single aromatic ring structures, one or more fused aromatic ring structures, covalently connected aromatic ring structures, any or all of which can include heteroatoms. Non-limiting examples of such heteroatoms that can be included in aromatic ring structures include O, N, and S.

As used herein, the term "alkylene" refers to acyclic or cyclic divalent hydrocarbons having a carbon chain length of from C₁ (in the case of acyclic) or C₄ (in the case of cyclic) to C₂₅, typically C₂ to C₁₂, which may be substituted or unsubstituted, and which may include substituents. As a non-limiting example, the alkylene groups can be lower alkyl radicals having from 1 to 12 carbon atoms. As a non-limiting illustration, "propylene" is intended to include both n-propylene and isopropylene groups; and, likewise, "butylene" is intended to include both n-butylene, isobutylene, and t-butylene groups.

Embodiments of the present invention provide a two-component water-borne adhesive composition that includes a) a first component containing a polyurethane/urea that includes silane functional groups and b) a second component containing a catalyst and/or a resin.

Embodiments of the invention provide catalysts that can be used in b). Such catalysts include, but are not limited to titanate esters, e.g., those of tetrabutyl titanate and tetrapropyl titanate; organotin compounds, e.g., dibutyl tin dilaurate, dibutyl tin maleate, dibutyl tin diacetate, tin octylate and tin naphthenate; lead octylate; amine-based compounds and salts of these compounds and carboxylates, e.g., butylamine, octylamine, dibutylamine, monoethanolamine, diethanolamine, triethanolamine, diethylenetriamine, triethylenetetramine, oleylamine, octylamine, cyclohexylamine, benzylamine, diethylaminopropylamine, xylylenediamine, triethylenediamine, guanidine, diphenylguanidine, 2,4,6-tris(dimethylaminomethyl) phenol, morpholine, N-methyl morpholine, and 1,3-diazabicyclo(5,4,6) undecene-7 (DBU); sulfonic acids, such as paratoluene sulfonic acid, low-molecular-weight polyamide resins produced by the reactions between excessive quantities of polyamines and polybasic acids; products of the reactions between excessive quantities of polyamines and epoxy compounds; and known silanol condensing catalysts, e.g., silane coupling agents containing amino group (e.g., γ-aminopropyl trimethoxy silane and N-(β-aminoethyl)ami- nopropyl methyldimethoxy silane). These compounds may be used either individually or in combination.

In a particular embodiment of the invention, the catalyst in b) is one or more selected from the group consisting of paratoluene sulfonic acid, dibutyl tin dilaurate, triethylamine, and triethylene diamine.

In an embodiment of the invention, component b) includes a resin, which can include polyvinyl acetate dispersions, non-limiting examples of which include those sold under the trade names RHODOPAS® available from RHODIA SA, Cedex, France and the Dispersion PVACs and UCAR® products available from Dow Chemical Company, Midland Michigan; ethylene-vinyl acetate dispersions, non-limiting examples of which include those sold under the trade names EVATANE® available from ATOFINA, a division of Total SA, Cedex, France and EVAL® available from Cellanese AG, Taunus, Germany; and/or functional polyurethane dispersions, non-limiting examples of functional groups include hydroxyl, carboxylic acid and corresponding salts thereof, and/or isocyanate groups. Specific examples of functional polyurethane dispersions include, but are not limited to, anionic polyurethane dispersions such as those available as DISPERCOLL® U 53, DISPERCOLL® U 56, DISPERCOLL® U 57, and DISPERCOLL® U KA 8713 available from Bayer Polymers LLC, Pittsburgh, PA.

In an embodiment of the invention, the catalyst can be present at from 0.001% to 1%, in some cases from 0.01% to 1%, in other cases from 0.001% to 0.1 %, and in some situations from 0.15 to 1% by weight of the two-component composition.

In an embodiment of the invention, the resin in b) can be present in the two-component composition at a level of at least 0.1 %, in some cases at least 1%, in other cases at least 2.5%, in some situations at least 5% and in other situations at least 10% by weight of the two-component composition. Also, the resin in b) can be present at a level of up to 75%, in some cases up to 50%, in other cases up to 40%, in some situations up to 30% and in other situations up to 25% by weight of the two-component composition. The resin in b) can be present in the two-component composition at any level or range between any two amounts recited above.

In an embodiment of the invention, the polyurethane/urea that includes silane functional groups is the reaction product obtained by reacting an isocyanate functional polyurethane with an amine functional aspartate.

In an embodiment of the invention, the isocyanate functional polyurethane is prepared by reacting i) polyisocyanates with ii) polyethers having hydroxyl and/or amine functionality.

In a particular embodiment of the invention, the polyethers can have the structure according to formula I

Z-[-(CR¹ ₂)ₘ-O-]ₙ-W-Z' (I)

where Z and Z' are independently selected from H, -OH, and NH₂,
- R¹: is selected from H, methyl and ethyl,
- W: is a covalent bond or C₁-C₈ linear or branched alkylene group with the proviso that when W is a covalent bond, Z' is H,
- n: is from 1 to 1,000, in some cases 1 to 500, in other cases from 2 to 250, and in some situations from 2 to 100, and
- m: is from 1 to 6, in some cases from 2 to 4, where at least one occurrence of -[-(CR¹₂)ₘ-O-]- in formula 1 is -[-CH₂CH₂-O-]-.

In an embodiment of the invention, the polyisocyanate contains two or more, in some cases from 2 to 6 isocyanate groups. In a particular embodiment of the invention, the polyisocyanate has a structure according to formula (III):

OCN-R⁷-NCO (III)

where R⁷ is selected from C₂ to C₂₄ linear, branched, and cyclic alkylene, arylene, and aralkylene, which may optionally contain one or more isocyanate groups.

In a further particular embodiment, the polyisocyanate is selected from 1,4-diisocyanatobutane, 1,5-diisocyanatopentane, 1,6-diisocyanatohexane, 2-methyl-1,5-diisocyanatopentane, 1,5-diisocyanato-2,2-dimethylpentane, 2,2,4- trimethyl-1,6-diisocyanatohexane, 2,4,4-trimethyl-1,6-diisocyanatohexane, 1,10-diisocyanatodecane, 1,3-diisocyanatocyclohexane, 1,4-diisocyanatocyclohexane, 1,3- bis-(isocyanatomethyl)cyclohexane, 1,4-bis-(isocyanatomethyl)cyclohexane, isophorone diisocyanate, 4,4'-diisocyanatodicyclohexylmethane, triisocyanatononane, ω,ω'-diisocyanato-1,3-dimethylcyclohexane, 1-isocyanato-1-methyl-3-isocyanatomethylcyclohexane, 1-isocyanato-1-methyl-4-isocyanatomethylcyclohexane, bis-(isocyanatomethyl)-norbornane, 1,5-naphthalene diisocyanate, 1,3- bis-(2-isocyanatoprop-2-yl)benzene, 1,4-bis-(2-isocyanatoprop-2-yl)benzene, 2,4-diisocyanatotoluene, 2,6-diisocyanatotoluene, 2,4'-diisocyanatodiphenylmethane, 4,4'-diisocyanatodiphenylmethane, 1,5-diisocyanatonaphthalene, 1,3-bis(isocyanatomethyl)benzene and mixtures thereof.

In another particular embodiment, the polyisocyanate can include one or more other isocyanate group-containing conventional polyisocyanates selected from biurets, uretdiones ("dimers"), allophanates and isocyanurates, iminooxadiazinediones ("trimers") of suitable isocyanate functional compounds can be used in the invention.

In a particular embodiment of the present invention, polyisocyanates having a functionality greater than two are used. Examples of suitable polyisocyanates having a functionality greater than two include, but are not limited to, those containing isocyanurate, uretdione, biuret, urethane, allophanate, iminooxadiazine dione, carbodiimide and/or oxadiazinetrione groups. The polyisocyanates adducts, which can have an NCO content of from 5 to 30% by weight, include:
1) Isocyanurate group-containing polyisocyanates which may be prepared as set forth in DE-PS 2,616,416, EP-OS 3,765, EP-OS 10,589, EP-OS 47,452, and U.S. Pat. Nos. 4,288,586 and 4,324,879. The isocyanato-isocyanurates generally have an average NCO functionality of 3 to 3.5 and an NCO content of 5 to 30%, in some cases 10 to 25% and in other cases 15 to 25% by weight.
2) Uretdione diisocyanates which can be prepared by oligomerizing a portion of the isocyanate groups of a diisocyanate in the presence of a suitable catalyst, e.g., a trialkyl phosphine catalyst, and which can be used in admixture with other aliphatic and/or cycloaliphatic polyisocyanates, particularly the isocyanurate group-containing polyisocyanates set forth under (1) above.
3) Biuret group-containing polyisocyanates which may be prepared according to the processes disclosed in U.S. Pat. Nos. 3,124,605; 3,358,010; 3,644,490; 3,862,973; 3,906,126; 3,903,127; 4,051,165; 4,147,714; or 4,220,749 by using co-reactants such as water, tertiary alcohols, primary and secondary monoamines, and primary and/or secondary diamines. These polyisocyanates can have an NCO content of 18 to 22% by weight and an average NCO functionality of from 3 to 3.5.
4) Urethane group-containing polyisocyanates which can be prepared in accordance with the process disclosed in U.S. Pat. No. 3,183,112, by reacting excess quantities of polyisocyanates, in some cases diisocyanates, with low molecular weight glycols and polyols having molecular weights of less than 400, such as trimethylol propane, glycerine, 1,2-dihydroxy propane and mixtures thereof. The urethane group-containing polyisocyanates can have an NCO content of 12 to 20% by weight and an (average) NCO functionality of 2.5 to 3.
5) Allophanate group-containing polyisocyanates which can be prepared according to the processes disclosed in U.S. Pat. Nos. 3,769,318, 4,160,080 and 4,177,342. The allophanate group-containing polyisocyanates can have an NCO content of from 12 to 21 % by weight and an (average) NCO functionality of 2 to 4.5.
6) Isocyanurate and allophanate group-containing polyisocyanates which can be prepared in accordance with the processes set forth in U.S. Pat. Nos. 5,124,427, 5,208,334 and 5,235,018, the disclosures of which are herein incorporated by reference. Such polyisocyanates can contain these groups in a ratio of monoisocyanurate groups to mono-allophanate groups of about 10:1 to 1:10, in some cases about 5:1 to 1:7.
7) Iminooxadiazine dione and optionally isocyanurate group-containing polyisocyanates which can be prepared in the presence of special fluorine-containing catalysts as described in DE-A 19611849. These polyisocyanates generally have an average NCO functionality of 3 to 3.5 and an NCO content of 5 to 30%, in some cases 10 to 25% and in other cases 15 to 25% by weight.
8) Carbodiimide group-containing polyisocyanates which may be prepared by oligomerizing di- or polyisocyanates in the presence of known carbodiimidization catalysts as described in DE-PS 1,092,007, U.S. Pat. No. 3,152,162 and DE-OS 2,504,400, 2,537,685 and 2,552,350.
9) Polyisocyanates containing oxadiazinetrione groups and containing the reaction product of two moles of a diisocyanate and one mole of carbon dioxide.

In a particular embodiment of the invention, the diisocyanates useful in the synthesis of isocyanurate, biurets, and uretdiones described above, which are then utilized in the invention include conventional aliphatic and aromatic diisocyanates, non-limiting examples of which include 1,4-tetramethylene diisocyanate, 1, 6-hexamethylene diisocyanate (HDI), 2,2,4-trimethyl-1,6-hexamethylene diisocyanate, 1,12-dodecamethylene diisocyanate, 1-isocyanato-3-isocyanatomethyl-3,5,5-trimethylcyclohexane (isophorone diisocyanate or IPDI), tetramethylxylyl diisocyanate (TMXDI), bis(4-isocyanatocyclohexyl)methane (H₁₂ MDI), bis(4-isocyanato-3-methyl-cyclohexyl) methane, toluenediisocyanate (TDI), bis(4-isocyanatophenyl)methane (MDI) and mixtures thereof. Other non-limiting examples include the adduct of 3 moles of toluene diisocyanate to 1 mole of trimethylol propane, the isocyanurate trimer of 1,6-diisocyanatohexane, the isocyanurate trimer of isophorone diisocyanate, the uretdione dimer of 1,6-diisocyanatohexane, the biuret trimer of 1,6-diisocyanatohexane, the allophanate-modified trimer or higher oligomers of 1,6-diisocyanatohexane, the adduct of 3 moles of α,α,α',α'-tetramethyl-xylene diisocyanate to 1 mole of trimethylol propane, and mixtures thereof.

In an embodiment of the invention, a non-limiting example of compounds according to formula I that can be used in the invention include polyethers. Suitable polyethers that can be used in the invention include those having a number average molecular weight of at least 250, in some cases at least 500 and in other cases at least 1,000. Also, the number average molecular weight of the compound according to formula I can be up to 20,000, in some cases up to 15,000 and in other cases up to 12,000. The number average molecular weight of the compound according to formula I can vary and range between any of the values recited above.

The number average molecular weight can be determined by titration and/or by gel permeation chromatography using appropriate standards.

In an embodiment of the invention, the polyethers have a maximum total degree of unsaturation of 0.1 milliequivalents/g (meq/g) or less, in some cases less than 0.04 (meq/g) in other cases less than 0.02 meq/g, in some situations less than 0.01 meq/g, in other situations 0.007 meq/g or less, and in particular situations 0.005 meq/g or less. The amount of unsaturation will vary depending on the method used to prepare the polyether as well as the molecular weight of the polyether. Such polyethers are known and can be produced by, as a non-limiting example, the ethoxylation and/or propoxylation of suitable starter molecules. Non-limiting examples of suitable starter molecules include diols such as ethylene glycol, propylene glycol, 1,3-butanediol, 1,4-butanediol, 1,6 hexanediol and 2-ethylhexanediol-1,3. Also suitable are polyethylene glycols and polypropylene glycols.

Suitable methods for preparing polyether polyols are known and are described, for example, in EP-A 283 148 and U.S. Patent Nos. 3,278,457, 3,427,256, 3,829,505, 4,472,560, 3,278,458, 3,427,334, 3,941,849, 4,721,818, 3,278,459, 3,427,335, and 4,355,188.

In a particular embodiment of the invention, the compound according to formula I is selected from poly(ethylene glycol) with a number average molecular weight (Mₙ) of from 50 to 1,000, amine terminated poly(ethylene oxide) with Mₙ of from 50 to 1,000, amine terminated poly(propylene oxide) with Mₙ of from 50 to 1,000, amine terminated copolymers of ethylene oxide and propylene oxide with Mₙ of from 50 to 1,000, and mixtures thereof.

In an embodiment of the invention, the polyether can be a polyoxyalkylene polyamine prepared by aminating the corresponding polyether polyols in known manner. In a particular embodiment of the invention, the polyether can be the polyoxyalkylene polyamines available under the trade name JEFFAMINE® , available from Huntsman Chemical Co., Austin, TX.

In an embodiment of the invention, the compound according to formula I in ii) is present at a level of at least 10%, in some cases at least 12%, in other cases at least 15%, in some situations at least 17.5% and in other cases at least 20% by weight of the reaction product of i) and ii). Also, the compound according to formula I in ii) is present at up to 90%, in some cases up to 88%, in other cases up to 85%, in some situations up to 82.5%, in other situations up to 80%, in some instances up to 70% and in other instance up to 60% by weight of the reaction product of i) and ii). The compound according to formula I in ii) can be present in the reaction product of i) and ii) at any level stated above and can range between any level stated above.

In an embodiment of the invention, the polyisocyanate of i) is present at a level of at least 10%, in some cases at least 12%, in other cases at least 15%, in some situations at least 17.5% and in other cases at least 20% by weight of the reaction product of i) and ii). Also, the polyisocyanate of i) is present at up to 90%, in some cases up to 88%, in other cases up to 85%, in some situations up to 82.5%, in other situations up to 80%, in some instances up to 70% and in other instance up to 60% by weight of the reaction product of i) and ii). The polyisocyanate of i) can be present in the reaction product of i) and ii) at any level stated above and can range between any level stated above.

In an embodiment of the invention, the equivalent ratio of Z and Z' groups in the compound of formula I in ii) to isocyanate groups in the polyisocyanate of i) is from 1:10 to 1:1, in some cases 1:5 to 1:1, in other cases 1:5 to 1:1.1 and in some situations 1:3 to 1:1.25.

Embodiments of the invention provide a polyurethane/urea that includes silane functional groups formed by reacting the above-described isocyanate functional polyurethane with an amine functional aspartate. Thus, the reaction product of i) and ii) is reacted with
iii) an amine functional aspartate compound corresponding to formula II: 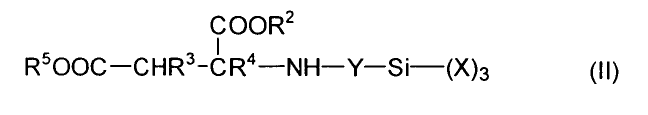 where
   - X: represents identical or different groups selected from C₁-C₁₀ linear or branched alkyl groups and C₁-C₁₀ linear or branched alkoxy groups with the proviso that at least two occurrences of X are alkoxy and if one or two X groups are methoxy, at least one X group must be a C₁-C₁₀ linear or branched alkyl group,
   - Y: represents a C₁-C₈ linear or branched alkylene group,
   - R₂ and R₅: are identical or different and represent organic groups which are inert to isocyanate groups at a temperature of 100°C or less, and
   - R₃ and R₄: are identical or different and represent hydrogen or organic groups which are inert towards isocyanate groups at a temperature of 100°C or less.

In an embodiment of the invention, the compound according to formula II is the reaction product of an N-(-3-trialkoxysilylalkyl) amine and a dialkyl maleate. In a particular embodiment, the N-(-3-trialkoxysilylalkyl) amine has a structure according to formula (IV):

NH₂-R⁸-Si(-O-R⁶)₃ (IV)

where R⁸ is a C₁-C₈ linear or branched alkylene group; and R⁶ is independently selected from C₂-C₁₀ linear or branched alkyl.

In an embodiment of the invention, the -SiX₃ groups of the compound corresponding to formula II are incorporated as the reaction product of an isocyanate group and the -NH- group of formula II.

In accordance with the present invention, the isocyanate groups react with the amine groups to at least initially form urea groups. The urea groups initially formed may be converted to hydantoin groups in known manner, e.g., by heating the compounds at elevated temperatures, optionally in the presence of a catalyst. Hydantoin groups will also form over time under ambient conditions. Therefore, the term "urea groups" is also intended to include other compounds containing the group, N-CO-N, such as hydantoin groups.

In an embodiment of the invention, the reaction product of i) and ii) is present at a level of at least 50%, in some cases at least 55%, in other cases at least 60%, in some situations at least 65% and in other situations at least 70% by weight of the polyurethane/urea that includes silane functional groups. Also, the reaction product of i) and ii) is present at a level of up to 99%, in some cases 97.5%, in other cases at least 90%, in some situations at least 85% and in other situations at least 80% by weight of the polyurethane/urea that includes silane functional groups. The reaction product of i) and ii) can be present in the polyurethane/urea that includes silane functional groups at any level stated above and can range between any level stated above.

In an embodiment of the invention, the amine functional aspartate is present at a level of at least 1%, in some cases at least 2.5%, in other cases at least 10%, in some situations at least 15% and in other situations at least 20% by weight of the polyurethane/urea that includes silane functional groups. Also, the amine functional aspartate is present at a level of up to 50%, in some cases 45%, in other cases at least 40%, in some situations at least 35% and in other situations at least 30% by weight of the polyurethane/urea that includes silane functional groups. The amine functional aspartate can be present in the polyurethane/urea that includes silane functional groups at any level stated above and can range between any level stated above.

In an embodiment of the invention, the first component a) is present in the two-component water-borne adhesive composition at a level of at least 25%, in some cases at least 50%, in other cases at least 60%, in some situations at least 70% and in other situations at least 75% by weight of the two-component composition. Also, the first component a) can be present in the two-component water-borne adhesive composition at a level of up to 99.999%, in some cases up to 99.99%, in other cases up to 99%, in some situations up to 95% and in other situations up to 90% by weight of the two-component composition. The first component b) can be present in the two-component composition at any level or range between any two amounts recited above.

Further to this embodiment, the second component b) is present in the two-component water-borne adhesive composition at a level of at least 0.001 %, in some cases at least 0.01 %, in other cases at least 1 %, in some situations at least 5% and in other situations at least 10% by weight of the two-component composition. Also, the second component b) can be present at a level of up to 75%, in some cases up to 50%, in other cases up to 40%, in some situations up to 30% and in other situations up to 25% by weight of the two-component composition. The second component b) can be present in the two-component composition at any level or range between any two amounts recited above.

In an embodiment of the invention, the amounts of first component a) and second component b) present in the two-component water-borne adhesive composition is 100%.

In an embodiment of the invention, the two-component water-borne adhesive composition includes, in either the first component and/or in the second component one or more materials selected from leveling agents, wetting agents, flow control agents, antifoaming agents, adhesion promoters, fillers viscosity regulators, plasticizers, pigments, dyes, UV absorbers, thermal stabilizers, antioxidants, and mixtures thereof.

Non-limiting examples of plasticizers that can be used in the present invention include dioctyl phthalate (DOP) dibutyl phthalate (DBP); diisodecyl phthalate (DIDP); dioctyl adipate isodecyl malonate; diethylene glycol dibenzoate, pentaerythritol ester; butyl oleate, methyl acetylricinoleate; tricresyl phosphate and trioctyl phosphate; polypropylene glycol adipate and polybutylene glycol adipate; and the like. Such plasticizers can be used alone or in combination of two or more.

Non-limiting examples of adhesion promoters that can be used in the present invention include epoxy resins, phenolic resins, silane and amino silane coupling agents known in the art, alkyl titanates and/or aromatic polyisocyanates.

Non-limiting examples of leveling agents that can be used in the present invention include cellulose, e.g., nitrocellulose and cellulose acetate butyrate.

Non-limiting examples of wetting agents that can be used in the present invention include glycols, silanes, anionic surfactants, and any other wetting agents known in the art.

Non-limiting examples of flow control agents, that can be used in the present invention include polyacrylic esters, non-ionic fluorinated alkyl ester surfactants, non-ionic alkylarylpolyether alcohols, silicones, and the like, as well as those available under the tradename RESIFLOW® by Estron Chemical, Inc., Parsippany, NJ, those sold under the tradename BENZOIN® by DSM, Inc.; those available under the tradename MODAFLOW® from Monsanto and those available under the tradename SURFYNOL® available from Air Products, Bethlehem, PA.

Non-limiting examples of antifoaming agents that can be used in the present invention include those available as FOAMEX® from Rohm and Haas Company, Philadelphia, PA, those available under the trade name BYK® , available from BYK-Chemie USA, Wallingford, CT, and those available under the trade name FOAMBRAKE® from BASF Corp., Mount Olive, NJ.

Non-limiting examples of fillers that can be used in the present invention include fumed silica, settling silica, silicic anhydride, silicic hydrate, talc, carbon black, limestone powder, coated and uncoated colloidal calcium carbonate, coated and uncoated ground calcium carbonate, coated and uncoated precipitated calcium carbonate, kaolin, diatomaceous earth, fired clay, clay, titanium dioxide, bentonite, organic bentonite, ferric oxide, zinc oxide, activated zinc white, and fibrous fillers such as glass fibers or filaments. The filler can have any suitable particle size, in an embodiment of the invention, the filler particle size can be from 5 nm to 10 µm, in some cases 10 nm to 5 µm, and in other cases from 25 nm to 1 µm.

Non-limiting examples of viscosity regulators that can be used in the present invention include alkali-soluble, acid-soluble, and hydrophobically-modified alkali-soluble or acid-soluble emulsion polymers, those available as ACRYSOL® from Rohm and Haas Company, cellulosics, modified cellulosics, natural gums, such as xanthan gum, and the like.

Non-limiting examples of pigments that can be used in the present invention include silica, calcium carbonate, magnesium carbonate, titanium oxide, iron oxide and carbon black.

Non-limiting examples of dyes that can be used in the present invention include mordant dyes, i.e., dyes prepared from plants, insects, and algae, and direct dyes, non-limiting examples being those based on benzidine or benzidine derivatives.

Non-limiting examples of ultra violet light absorbers that can be used in the present invention include benzotriazole-based ultra violet ray absorbers, salicylate-based ultraviolet ray absorbers, benzophenone-based ultraviolet ray absorbers, hindered amine-based light stabilizers and nickel-based light stabilizers.

Non-limiting examples of thermal stabilizers that can be used in the present invention include HCl scavengers, a non-limiting example being epoxidized soybean oil, esters of beta-thiodipropionic acid, non-limiting examples being lauryl, stearyl, myristyl or tridecyl esters, mercaptobenzimidazole, the zinc salt of 2-mercaptobenzimidazole, zinc dibutyldithiocarbamate, dioctadecyl disulfide, pentaerythritol tetrakis-(beta-dodecylmercapto)-propionate, and lead phosphate.

Non-limiting examples of antioxidants that can be used in the present invention include 2,6-di-t-butyl phenol, 2,4-di-t-butyl phenol, 2,6-di-t-butyl-4-methyl phenol, 2,5-di-t-butylhydroquinone, n-octadecyl-3-(3,5-di-t-butyl-4-hydroxyphenyl)propionate, pentaerythrityl-tetrakis[3-(3,5-di-t-butyl-4-hydroxyphenyl) propionate], 2,2'-methylenebis(4-methyl-6-t-butyl phenol), 4,4'-butylidenebis(3-methyl-6-t-butyl phenol), 4,4'-thiobis(3-methyl-6- -t-butyl phenol), N,N'-diphenyl-p-phenylenediamine, 6-ethoxy-2,2,4-trimethyl-1,2-dihydroquinoline and the antioxidants available under the trade name IRGANOX® from Ciba Specialty Chemicals, Basel, Switzerland.

The present invention is also directed to a method of bonding a first substrate to a second substrate. The method includes combining component a) and component b) as described above to form a mixture; applying a coating of the mixture to at least one surface of the first substrate or the second substrate, and contacting a surface of the first substrate with a surface of the second substrate, where at least on of the contacting surfaces is has the coating applied thereto.

In a particular embodiment of the invention, one of the first substrate and the second substrate includes canvas and/or a plastic. Additionally, one of the first substrate and the second substrate includes wood, metals, plastics, paper, canvas, ceramics, stone, glass, and/or concrete.

In a selected embodiment, the first substrate can include canvas and/or a plastic and the second substrate can include a metal. Further to this embodiment, the metal comprises iron or aluminum. Also, the plastic can be selected from poly(ethylene), poly(propylene), poly(ethylene terephthalate), and mixtures thereof.

In an embodiment of the invention, the canvas can contain cotton fibers, nylon fibers, and mixtures thereof. Additionally or alternatively, the canvas can include fibers containing poly(ethylene), poly(propylene), poly(ethylene terephthalate), and mixtures thereof.

When surfaces of the first and second substrate are contacted, they are contacted at conditions and for a length of time such that a bond is formed between the substrates. A particular advantage of the present invention is that combinations of substrates that heretofore have been difficult to bond with a sufficient peel strength (a measure of the force required to separate the substrates) can be so bonded. A non-limiting example of such combinations of substrates includes bonding canvas to metal.

While not being bound to a single theory, the bond between substrates is formed using the inventive adhesive based on the interfacial interactions (for example, wetting and surface energies) between the adhesive and the substrates and the development of crosslinks in or the curing of the adhesive.

In an embodiment of the invention, the substrates are contacted at a temperature sufficient to promote the adhesive's ability to bond the substrates together. As such, the substrates are contacted at a temperature of at least 0°C, in some cases at least 10°C, in other cases at least 20°C and in some situations at least 25°C. Also, the contact temperature for the substrates can be up to 150°C, in some cases up to 120°C, in other cases up to 100°C and in some situations up to 80°C. The temperature for contacting the substrates can be any value or range between any value recited above.

In an embodiment of the invention, the substrates are contacted at a pressure sufficient to promote the adhesive's ability to bond the substrates together. As such, the substrates are contacted at a pressure of at least ambient or atmospheric pressure, in some cases at least 10 psi, in other cases at least 20 psi and in some situations at least 30 psi. Also, the contact pressure for the substrates can be up to 500 psi, in some cases up to 400 psi, in other cases up to 300 psi and in some situations up to 250 psi. The pressure for contacting the substrates can be any value or range between any value recited above.

The present invention is further directed to an assembly made according to the above-described method including at least the first substrate and the second substrate bonded together.

### EXAMPLES

### Example1

The example demonstrates the preparation of a silane functional aspartate according to the invention. The aspartate resin was prepared according to U.S. Patent No. 4,364,955 to Kramer et al. To a 5-liter flask, fitted with agitator, thermocouple, nitrogen inlet, addition funnel and condenser was added 1483 g (8.27 equivalents (eq.)) of 3-aminopropyltrimethoxysilane followed by 1423.2 (8.27 eq.) diethyl maleate over a two hour period at 25°C, and held at that temperature for five hours. The unsaturation number, determined by iodine titration, was 0.6, indicating that the reaction was approximately 99% complete. The viscosity was 11 cps measured using a BROOKFIELD® Digital Viscometer, Model DV-II+, Brookfield Engineering, Inc., Middleboro, MA, spindle 52, 100 rpm at 25°C.

### Example 2

This example describes the preparation of a silane modified, hydrophilicly modified polyisocyanate according to the invention. To a 250-liter, round bottom flask equipped with an agitator, nitrogen inlet, addition funnel, and condenser was added 69.03 g (0.35 eq.) of DESMODUR® N 3400 (polyisocyanate based on HDI available from Bayer Polymers LLC, Pittsburgh, PA) and 12.19 g (0.027 eg) CARBOWAX™ 550 (a methoxypolyethylene glycol available from Dow Chemical Company, Midland, MI ). The mixture was heated to 45°C and held for six hours after which the NCO content was 15.9 wt.% by NCO titration (theoretical = 16.2%). The silane functional aspartate of Example 1, 17.1g was then added and the mixture exothermed to 50°C where the mixture was held for two hours. The NCO content was 10.8 wt.% by NCO titration (theoretical = 11.5%). The viscosity was 500 cps at 25°C.

### Examples 3-7

Adhesive formulations for use with canvas and cold roll steel laminates were prepared as indicated in the table below.

| Example No. | 3 | 4 | 5 | 6 | 7 |
|---|---|---|---|---|---|
| Aqueous Polyurethane Dispersion¹ (g) | 50.0 | 50.1 | 50.2 | 50.1 | 50.1 |
| Aliphatic Polyisocyanate² (g) | -- | 1.5 | -- | -- | -- |
| Polyisocyanate of Example 2 (g) | -- | -- | 1.6 | 2.7 | 3.9 |
| Maximum Peel strength (pli³) | | | | | |
| Initial | 0.9 | 20.9 | 19.3 | 26.4 | 17.6 |
| 3 days | 9.1 | 15.2 | 36.3 | 36.8 | 33.9 |
| Average Peel strength (pli³) | | | | | |
| Initial | 0.5 | 8.6 | 15.1 | 16.1 | 10.2 |
| 3 days | 6.3 | 11.2 | 28.5 | 27.3 | 25.0 |

| | | | | | |
|---|---|---|---|---|---|
| ¹ DISPERSOLL® U 54 available from Bayer Corp. | | | | | |
| ² DESMODUR® DN available from Bayer Corp. | | | | | |
| ³ pounds per lineal inch | | | | | |

The ingredients were combined and mixed at 650 rpm until homogeneous. The mixture was then brushed onto a section of canvas and allowed to dry at ambient conditions for 30 minutes. A second coating was similarly applied to the canvas and a coating was brush applied to a cold roll steel coupon and both allowed to dry for one hour. The coated side of the canvas was laid over the coated side of the coupon to form a laminate, which was placed in a heat press at 200 psi and 65°C for 15 seconds. The samples were then stored at 23°C and 50% relative humidity for 24 hours. The 180 peel test was conducted at a crosshead speed of 4 inches per minute according to ASTM Test No. D-903.

The data demonstrate the superior peel strength achieved when adhesives according to the present invention are used to bond canvas to steel.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A two-component water-borne adhesive composition comprising:
a) a first component comprising the reaction product obtained by reacting:
i) polyisocyanates with
ii) compounds according to formula I
Z-[-(CR¹ ₂)ₘ-O-]ₙ-W-Z' (I)
wherein Z and Z' are independently selected from H,
-OH, and NH₂,
R¹ is selected from H, methyl and ethyl,
W is a covalent bond or C₁-C₈ linear or branched alkylene group with the proviso that when W is a covalent bond, Z' is H,
n is from 1 to 1,000, and
m is from 1 to 6, wherein at least one occurrence of -[-(CR¹₂)ₘ-O-]- in formula 1 is -[-CH₂CH₂-O-]-;
the reaction product of i) and ii) being reacted with
iii) a compound corresponding to formula II: 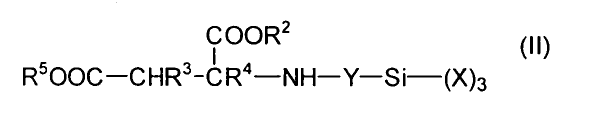
wherein
X represents identical or different groups selected from C₁-C₁₀ linear or branched alkyl groups and C₁-C₁₀ linear or branched alkoxy groups with the proviso that at least two occurrences of X are alkoxy and if one or two X groups are methoxy, at least one X group must be a C₁-C₁₀ linear or branched alkyl group,
Y represents a C₁-C₈ linear or branched alkylene group,
R₂ and R₅ are identical or different and represent organic groups which are inert to isocyanate groups at a temperature of 100°C or less, and
R₃ and R₄ are identical or different and represent hydrogen or organic groups which are inert towards isocyanate groups at a temperature of 100°C or less, and
b) a second component comprising a catalyst and/or a resin.

2. The composition of Claim 1, wherein the polyisocyanate contains from 2 to 6 isocyanate groups.

3. The composition of Claim 1, wherein the polyisocyanate is selected from the group consisting of isocyanurates, uretdiones, biurets, urethanes, allophanates, iminooxadiazine diones, carbodiimides and oxadiazinetriones, and polyisocyanates according to formula (III):
OCN-R⁷-NCO (III)
wherein R⁷ is selected from C₂ to C₂₄ linear, branched, and cyclic alkylene, arylene, and aralkylene, which may optionally contain one or more isocyanate groups.

4. The composition of Claim 1, wherein the polyisocyanate is selected from the group consisting of 1,4-diisocyanatobutane, 1,5-diisocyanatopentane, 1,6-diisocyanatohexane, 2-methyl-1,5-diisocyanatopentane, 1,5-diisocyanato-2,2-dimethylpentane, 2,2,4-trimethyl-1,6-diisocyanatohexane, 2,4,4-trimethyl-1,6-diisocyanatohexane, 1,10-diisocyanatodecane, 1,3- diisocyanatocyclohexane, 1,4-diisocyanatocyclohexane, 1,3- bis-(isocyanatomethyl)cyclohexane, 1,4-bis-(isocyanatomethyl)cyclohexane, isophorone diisocyanate, 4,4'-diisocyanatodicyclohexylmethane, triisocyanatononane, ω,ω'-diisocyanato-1,3-dimethylcyclohexane, 1-isocyanato-1-methyl-3-isocyanatomethylcyclohexane, 1-isocyanato-1-methyl-4-isocyanatomethylcyclohexane, bis-(isocyanatomethyl)norbornane, 1,5-naphthalene diisocyanate, 1,3- bis-(2-isocyanatoprop-2-yl)benzene, 1,4-bis-(2-isocyanatoprop-2-yl)benzene, 2,4-diisocyanatotoluene, 2,6-diisocyanatotoluene, 2,4'-diisocyanatodiphenylmethane, 4,4'-diisocyanatodiphenylmethane, 1,5-diisocyanatonaphthalene, 1,3-bis(isocyanatomethyl)benzene and mixtures thereof.

5. The composition of Claim 1, wherein the compound according to formula I is selected from the group consisting of poly(ethylene glycol) with a number average molecular weight (Mₙ) of from 50 to 1,000, amine terminated poly(ethylene oxide) with Mₙ of from 50 to 1,000, amine terminated poly(propylene oxide) with Mₙ of from 50 to 1,000, amine terminated copolymers of ethylene oxide and propylene oxide with Mₙ of from 50 to 1,000, and mixtures thereof.

6. The composition of Claim 1, wherein the compound of formula I is the reaction product of an N-(-3-trialkoxysilylalkyl) amine and a dialkyl maleate.

7. The composition of Claim 6, wherein the N-(-3-trialkoxysilylalkyl) amine has a structure according to formula (IV):
NH₂-R⁸-Si(-O-R⁶)₃ (IV)
wherein R⁸ is a C₁-C₈ linear or branched alkylene group; and R⁶ is independently selected from C₂-C₁₀ linear or branched alkyl.

8. The composition of Claim 1, wherein the -SiX₃ groups of the compound corresponding to formula II are incorporated as the reaction product of an isocyanate group and the -NH- group of formula II.

9. The composition of Claim 1, wherein the catalyst in b) is one or more selected from the group consisting of titanate esters, organotin compounds, amine-based compounds and carboxylate salts thereof, sulfonic acids, low-molecular-weight polyamide resins produced by the reactions between excessive quantities of polyamines and polybasic acids, products of the reactions between excessive quantities of polyamines and epoxy compounds, silanol condensing catalysts, and mixtures thereof.

10. The composition of Claim 1, wherein the catalyst in b) is one or more selected from the group consisting of paratoluene sulfonic acid, dibutyl tin dilaurate, triethylamine, and triethylene diamine.

11. The composition of Claim 1, wherein the resin in b) is one or more selected from the group consisting of polyvinyl acetates, ethylene-vinyl acetates, and functional polyurethanes.

12. The composition of Claim 1, further comprising, in either or both of a) and b), one or more materials selected from the group consisting of leveling agents, wetting agents, flow control agents, antifoaming agents, fillers viscosity regulators, plasticizers, pigments, dyes, UV absorbers, adhesion promoters, thermal stabilizers, antioxidants, and mixtures thereof.

13. The composition of Claim 1, wherein the compound according to formula I in ii) is present at from 10 to 90 percent by weight and the polyisocyanate of i) is present at from 10 to 90 percent by weight of the reaction product of i) and ii).

14. The composition of Claim 1, wherein the reaction product of i) and ii) is present at from 50 to 99 percent by weight and iii), the compound corresponding to formula II, is present at from 1 to 50 percent by weight of a).

15. The composition of Claim 1, wherein the equivalent ratio of Z and Z' groups in the compound of formula I in ii) to isocyanate groups in the polyisocyanate of i) is from 1:10 to 1:1.

16. The composition of Claim 1, wherein the first component a) is present at from 25% to 99.999% by weight of the two-component composition and the second component b) is present at from 0.001% to 75% by weight of the two-component composition.

17. The composition of Claim 1, wherein the compound according to formula I has a number average molecular weight of from 500 to 15,000.

18. The composition of Claim 1, wherein the catalyst of b) is present at from 0.001 to 1 percent by weight of the two-component composition.

19. A method of bonding a first substrate to a second substrate comprising
combining component a) and component b) of Claim 1 to form a mixture,
applying a coating of the mixture to at least one surface of the first substrate or the second substrate, and
contacting a surface of the first substrate with a surface of the second substrate, wherein at least on of the contacting surfaces is has the coating applied thereto.

20. The method of Claim 19, wherein one of the first substrates and the second substrates comprises canvas and/or a plastic.

21. The method of Claim 19, wherein one of the first substrates and the second substrates comprises a substrate selected from the group consisting of wood, metals, plastics, paper, canvas, ceramics, stone, glass, and concrete.

22. The method of Claim 19, wherein the first substrate comprises canvas and/or a plastic and the second substrate comprises a metal.

23. The method of Claim 21, wherein the metal comprises iron or aluminum.

24. The method of Claim 22, wherein the metal comprises iron or aluminum.

25. The method of Claim 22, wherein the plastic is selected from the group consisting of poly(ethylene), poly(propylene), poly(ethylene terephthalate), and mixtures thereof.

26. The method of Claim 22, wherein the canvas comprises cotton fibers, nylon fibers, and mixtures thereof.

27. The method of Claim 26, wherein the canvas further comprises fibers comprising poly(ethylene), poly(propylene), poly(ethylene terephthalate), and mixtures thereof.

28. The method of Claim 19, wherein the first substrate and the second substrate are contacted at a temperature of from 0°C to 150°C.

29. The method of Claim 19, wherein the first substrate and the second substrate are contacted at a pressure of from atmospheric pressure to 500 psi.

30. An assembly made according to Claim 19 comprising at least the first substrate and the second substrate bonded together.
